(19) Europäisches Patentamt
European Patent Office
Office européen des brevets

(11) EP 2 877 540 B1

(12) **EUROPEAN PATENT SPECIFICATION**

(45) Date of publication and mention of the grant of the patent:
**01.06.2016 Bulletin 2016/22**

(21) Application number: **13740145.1**

(22) Date of filing: **10.07.2013**

(51) Int Cl.:
***C09D 5/00*** *(2006.01)*

(86) International application number:
**PCT/US2013/049926**

(87) International publication number:
**WO 2014/018266 (30.01.2014 Gazette 2014/05)**

(54) **CURABLE ANTIFOULING COMPOSITION, METHOD OF USE, AND ARTICLES**

HÄRTBARE FÄULNISVERHINDERNDE ZUSAMMENSETZUNG, VERFAHREN ZUR VERWENDUNG UND ARTIKEL

COMPOSITION ANTISALISSURES DURCISSABLE, SON PROCÉDÉ D'UTILISATION ET ARTICLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.07.2012 US 201261675162 P**

(43) Date of publication of application:
**03.06.2015 Bulletin 2015/23**

(73) Proprietor: **3M Innovative Properties Company**
**St. Paul, MN 55133-3427 (US)**

(72) Inventors:
- **QIU, Zai-Ming**
**Saint Paul, Minnesota 55133-3427 (US)**
- **KUGEL, Alexander J.**
**Saint Paul, Minnesota 55133-3427 (US)**
- **SVAROVSKY, Michael J.**
**Saint Paul, Minnesota 55133-3427 (US)**
- **BOMMARITO, G. Marco**
**Saint Paul, Minnesota 55133-3427 (US)**

(74) Representative: **Herzog, Fiesser & Partner Patentanwälte PartG mbB**
**Isartorplatz 1**
**80331 München (DE)**

(56) References cited:

| | |
|---|---|
| **WO-A1-01/94446** | **WO-A1-02/074870** |
| **WO-A1-2009/076389** | **WO-A1-2012/073198** |
| **WO-A2-03/099904** | **WO-A2-2007/025293** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 877 540 B1

## Description

### TECHNICAL FIELD

The present disclosure broadly relates to compositions useful for inhibiting biofouling.

### BACKGROUND

The term "biofouling" refers to the attachment of organisms to surfaces of objects. Biofouling typically occurs where water-based liquids are in contact with other materials. Biofouling is ubiquitous, but is most significant economically to the shipping industries, since high levels of biofouling on a ship's hull significantly increases drag and increases fuel consumption. Industrially important impacts of biofouling include: maintenance of mariculture, membrane systems (e.g., membrane bioreactors and reverse osmosis spiral wound membranes), and cooling water cycles of large industrial equipments and power stations. Biofouling can occur in oil pipelines carrying oils with entrained water especially those carrying used oils, cutting oils, oils rendered water-soluble through emulsification, and/or hydraulic oils. Other things impacted by biofouling include marine surfaces, medical surfaces, household surfaces, microelectrochemical drug delivery devices, papermaking and pulp industry machines, underwater instruments, fire protection system piping, and sprinkler system nozzles.

In the clinical area, biofouling in the form of biofilm formation is believed to have a significant role in catheter associated urinary tract infections (CAUTI) and ventilator associated pneumonia (VAP). CAUTIs comprise the largest percentage of hospital acquired infections (HAIs) and are the second most common cause of nosocomial bloodstream infections.

In groundwater wells, biofouling build-up can limit recovery flow rates, as is the case in the exterior and interior of ocean-laying pipes where fouling is often removed with a tube cleaning process.

### SUMMARY

In one aspect, the present disclosure provides a curable antifouling composition comprising components:

a) at least one fluorinated polymer, wherein each said at least one fluorinated polymer independently comprises:

m divalent groups represented by the formula

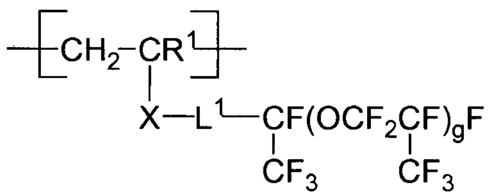

wherein $R^1$ independently represents H or methyl, X independently represents a covalent bond or a divalent organic linking group, $L^1$ independently represents a covalent bond or a divalent organic linking group, m represents a positive integer, and g independently represents an integer in the range of from 3 to 40, inclusive;
n divalent groups represented by the formula

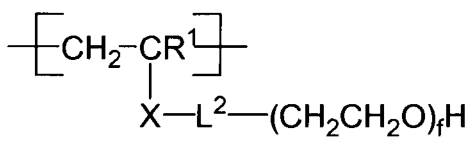

wherein $L^2$ independently represents a covalent bond or divalent organic linking group, n represents a positive integer; and f independently represents an integer in the range of from 3 to 200, inclusive;
p divalent groups represented by the formula

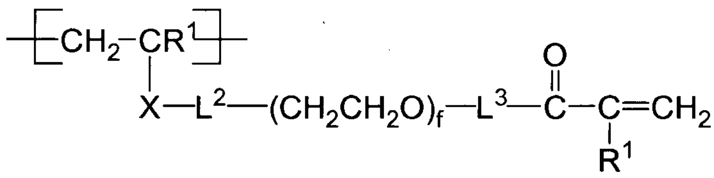

wherein p represents a positive integer, and wherein $L^3$ represents a covalent bond or a divalent organic linking group; and

b) a nonfluorinated free-radically polymerizable ethylenically-unsaturated compound; and
c) an effective amount of free-radical initiator,

wherein component a) comprises at least 50 percent of the total weight of components a), b), and c) combined.

In another aspect, the present disclosure provides a method of using a curable antifouling composition, the method comprising:

applying a curable antifouling composition to at least a portion of a surface of a substrate, wherein the substrate is selected from the group consisting of marine vessel hulls, anchors, piers, docks, caissons, invasive medical devices, non-invasive medical devices, handrails, door knobs, countertops, membrane support frames, heat exchangers, microelectrochemical drug delivery devices, papermaking machines, tanks for holding liquid, water pipes, plumbing fixtures, and mariculture apparatuses; and
at least partially curing the curable antifouling composition, wherein the curable antifouling composition comprises:

a) at least one fluorinated polymer, wherein each said at least one fluorinated polymer independently comprises the components:

m divalent groups represented by the formula

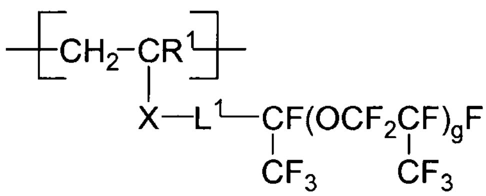

wherein $R^1$ independently represents H or methyl, X independently represents a covalent bond or a divalent organic linking group, $L^1$ independently represents a covalent bond or a divalent organic linking group, m represents a positive integer, and g independently represents an integer in the range of from 3 to 40, inclusive;
n divalent groups represented by the formula

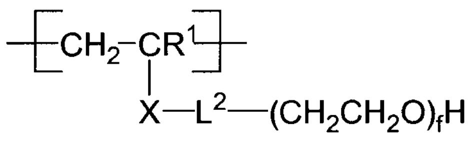

wherein $L^2$ independently represents a covalent bond or divalent organic linking group, n represents a positive integer; and f independently represents an integer in the range of from 3 to 200, inclusive;
p divalent groups represented by the formula

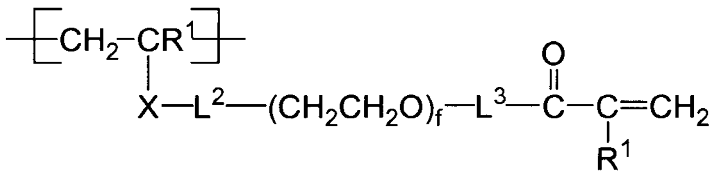

wherein p represents a positive integer, and wherein $L^3$ represents a covalent bond or a divalent organic linking group; and

b) an effective amount of free-radical initiator.

Antifouling compositions according to the present disclosure, applied to a surface of a substrate and sufficiently cured, provide articles with antifouling properties.

Accordingly, in another aspect, the present disclosure provides an article comprising a substrate having a surface, wherein at least a portion of the surface has an antifouling coating thereon, wherein the substrate is selected from the group consisting of marine vessel hulls, anchors, piers, docks, caissons, invasive medical devices, non-invasive medical devices, handrails, door knobs, countertops, membrane support frames, heat exchangers, microelectrochemical drug delivery devices, papermaking machines, tanks for holding liquid, water pipes, plumbing fixtures, and mariculture apparatuses, wherein the antifouling coating comprises an at least partially cured curable antifouling composition, and wherein the curable antifouling composition comprises components:

a) at least one fluorinated polymer, wherein each said at least one fluorinated polymer independently comprises:

m divalent groups represented by the formula

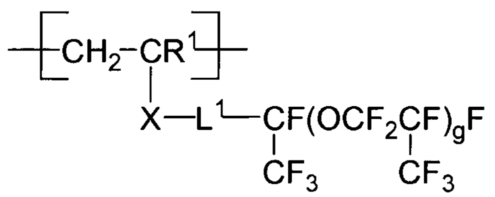

wherein $R^1$ independently represents H or methyl, X independently represents a covalent bond or a divalent organic linking group, $L^1$ independently represents a covalent bond or a divalent organic linking group, m represents a positive integer, and g independently represents an integer in the range of from 3 to 40, inclusive;
n divalent groups represented by the formula

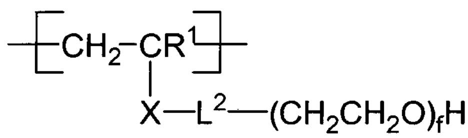

wherein $L^2$ independently represents a covalent bond or divalent organic linking group, n represents a positive integer; and f independently represents an integer in the range of from 3 to 200, inclusive;
p divalent groups represented by the formula

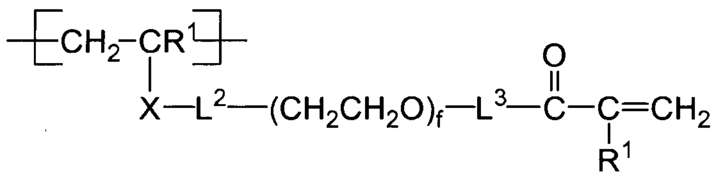

wherein p represents a positive integer, and wherein $L^3$ represents a covalent bond or a divalent organic linking group; and

b) an effective amount of free-radical initiator.

As used herein:

The term "ethylenically-unsaturated group" refers to a carbon-carbon double bond.

The term "free-radically polymerizable ethylenically-unsaturated group" refers to an ethylenically-unsaturated group that participates in crosslinking reactions upon exposure to free- radicals. Free-radically polymerizable groups

include, for example, (meth)acryl groups, alkenyl groups, styrenyl groups, and combinations thereof.

The prefix "hetero" refers to replacement of at least one carbon atom by N, O, S, or P.

The term "hydrocarbylene" refers to a divalent radical consisting of carbon and hydrogen atoms.

The term "(meth)acryl" refers to the group $-C(=O)CH=CH_2$ (i.e., acryl) and/or the group $-C(=O)C(CH_3)=CH_2$ (i.e., methacryl). For example, a poly(meth)acrylate may include only acrylate groups, only methacrylate groups, or a combination thereof.

Features and advantages of the present disclosure will be further understood upon consideration of the detailed description as well as the appended claims.

BRIEF DESCRIPTION OF THE DRAWINGS

FIG. 1 is a schematic perspective view of an exemplary pipe having an inner antifouling coating.

It should be understood that numerous other modifications and embodiments can be devised by those skilled in the art, which fall within the scope and spirit of the principles of the disclosure. The figure may not be drawn to scale.

DETAILED DESCRIPTION

Curable antifouling compositions useful in practice of the present disclosure include free-radical initiator (i.e., at least one free-radical initiator) and at least one fluorinated polymer (hereinafter identified as fluoropolymer FP), that independently comprises:

m divalent groups represented by the formula

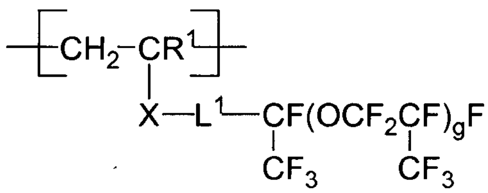

,

n divalent groups represented by the formula

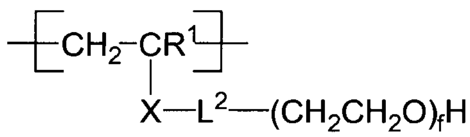

,

and

p divalent groups represented by the formula

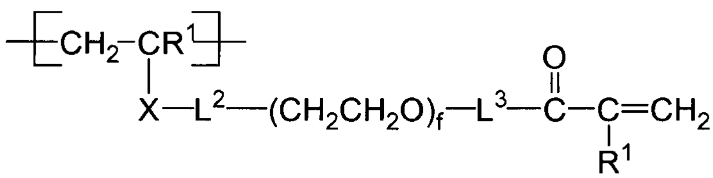

wherein p represents a positive integer, and further wherein $R^1$, X, $L^1$, $L^2$, $L^3$, m, n, p, f, and g are as defined below.

Each $R^1$ independently represents H or methyl.

Each X independently represents a covalent bond or a divalent linking group. Examples of X divalent linking groups include, oxygen, organic divalent groups such as, for example, $-N(CH_3)-$, sulfonylamino, aminosulfonyl, hydrocarbylene (e.g., alkylene, arylene, alkarylene, or aralkylene), heteroalkylene (e.g., $-CH_2O-$ or $-OCH_2-$), carbonyl, oxy-

carbonyl, carbonyloxy, alkylamino, arylamino, and combinations thereof. $X^1$ can be linear, branched, and or cyclic. It may be substituted with halogen (e.g., F, Cl, Br, or a combination thereof). In some preferred embodiments, X is carbonyloxy (i.e., forming a $-C(=O)O-L^1-$ segment or a $-C(=O)O-L^2-$ segment).

Each $L^1$ independently represents a covalent bond or a divalent linking group. Examples of $L^1$ divalent linking groups include, oxygen, organic divalent groups such as, for example, $-N(CH_3)-$, sulfonylamino, aminosulfonyl, hydrocarbylene (e.g., alkylene, arylene, alkarylene, or aralkylene), heteroalkylene (e.g., $-CH_2O-$ or $-OCH_2-$), carbonyl, oxycarbonyl, carbonyloxy, alkylamino, arylamino, and combinations thereof. $L^1$ can be linear, branched, and or cyclic. It may be substituted with halogen (e.g., F, Cl, Br, or a combination thereof). In some embodiments, $L^1$ has from 1 to 4, 6, 10, 15, 25, or even 30 carbon atoms, inclusive. In some preferred embodiments, $L^1$ is selected from the group consisting of $-CH_2CH_2NHC(=O)-$, $-CH_2CH_2OCH_2-$, and $-(CH_2CH_2O)_2CH_2-$.

Each $L^2$ independently represents a covalent bond or divalent linking group. Examples of $L^2$ divalent organic linking groups include hydrocarbylene (e.g., alkylene, arylene, alkarylene, or aralkylene), heteroalkylene (e.g., $-CH_2O-$ or $-OCH_2-$), carbonyl, oxycarbonyl, carbonyloxy, alkylamino, arylamino, sulfonylamino, aminosulfonyl, and combinations thereof. $L^2$ can be linear, branched, and or cyclic. It may be substituted with halogen (e.g., F, Cl, Br, or a combination thereof. In some embodiments, $L^2$ has from 1 to 4, 6, 10, 15, 25, or even 30 carbon atoms, inclusive. In some preferred embodiments, $L^2$ is a covalent bond or $-CH_2CH_2NHC(=O)O-$.

Each $L^3$ independently represents a covalent bond or divalent linking group. Examples of $L^3$ divalent linking groups include hydrocarbylene (e.g., alkylene, arylene, alkarylene, or aralkylene), heteroalkylene (e.g., $-CH_2O-$ or $-OCH_2-$), carbonyl, oxycarbonyl, carbonyloxy, alkylamino, arylamino, sulfonylamino, aminosulfonyl, and combinations thereof. $L^3$ can be linear, branched, and or cyclic. It may be substituted with halogen (e.g., F, Cl, Br, or a combination thereof. In some embodiments, $L^3$ has from 1 to 4, 6, 10, 15, 25, or even 30 carbon atoms, inclusive. In some preferred embodiments, $L^3$ is a covalent bond or $-(C=O)NHCH_2CH_2-$; for example, as might result from condensation of the corresponding alcohol with 2-isocyanatoethyl (meth)acrylate.

Each g independently represents an integer in a range of from 3 to 20, 3 to 25, 3 to 30, 3 to 35, or 3 to 40, inclusive. Preferably, g is an integer a range of from 5 to 20, 5 to 25, 5 to 30, 5 to 35, or even 5 to 40.

Each f independently represents an integer in the range of from 3 to 200, inclusive. Preferably, f is in a range of from 5 to 68, although this is not a requirement.

Each m independently represents a positive integer (e.g., at least 1, 2, 3, 4, 5, 6, 7, 8, 9, 10, 15, 20, 25, or even at least 30). Preferably, m is less than 50, but this is not a requirement.

Each n independently represents a positive integer (e.g., at least 1, 2, 3, 4, 5, 6, 7, 8, 9, 10, 15, 20, 25, or even at least 40). Preferably, n is less than or equal to 200, but this is not a requirement.

Each p independently represents a positive integer (e.g., at least 1, 2, 3, 4, 5, 6, 7, 8, 9, 10, 15, 20, or even at least 25). Preferably, p is less than or equal to 400, but this is not a requirement.

In some embodiments, the ratio of m to (n + p) is in a range of from 60:40 to 5:95. Preferably, the ratio of m to (n + p) is in a range of from 20:80 to 45:55, but this is not a requirement.

In some embodiments, the ratio of n to p is in a range of from 2:98 to 90:10. Preferably, the ratio of n to p is in a range of from 5:95 to 30:70, but this is not a requirement.

Fluoropolymer FP may comprise additional divalent groups, for example, as a result of inclusion of corresponding monofunctional ethylenically-unsaturated monomers prior to polymerization to form Fluoropolymer FP. Selection of such monomers is within the capability of one ordinary skill in the art. Examples of such divalent groups include those represented by the formula

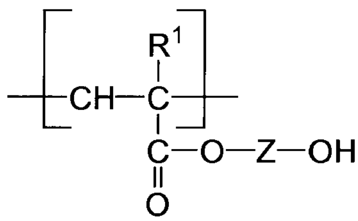

wherein $R^1$ is as previously defined and Z represents an alkylene group having from 2, 3, 4, 5, or 6 carbon atoms. Terminal -OH groups may be converted into a curable (meth)acrylate group, for example by reaction with 2-isocyanatoethyl (meth)acrylate.

Fluoropolymer FP can be prepared according to methods known in the art; for example, by coupling a fluorinated polymer having a pendant hydroxyl group and isocyanatoethyl meth(acrylate). Suitable fluorinated polymers having pendant hydroxyl groups and methods for their manufacture (e.g., by free-radical polymerization) are described in U.S. Patent Nos. 3,553,179 (Bartlett) and 3,544,537 (Brace) as well as U.S. Patent Appl. Publ. No. 2004/0077775 A1 (Audenaert et al.). Further details and methods for how to make compounds corresponding to Fluoropolymer FP and related derivatives can be found in U.S. Patent Appl. Publ. No. 2010/0310875 A1 (Hao et al.). As is known in the art, the molecular weight of Fluoropolymer FP can be controlled by the reaction conditions such as, for example, reaction time, reaction temperature, free-radical initiator amount, and chain transfer agent.

Fluoropolymer FP may have a relatively low polydispersity. In some embodiments, the polydispersity may be less than 5, 4, 3, 2.5, or even less than 2.

Fluoropolymer FP may have any molecular weight subject to the above formula restrictions. In some embodiments (e.g., in those embodiments in which $L^1$ and $L^2$ represent a covalent bond), fluoropolymer FP preferably has a number average molecular weight of at least 700 grams/mole (g/mol), 800 g/mol, 900 g/mol, 1000 g/mol, 1100 g/mol, 1200 g/mol, 1300 g/mol, 1400 g/mol, 1500 g/mol, 1600 g/mol, 1700 g/mol, 1800 g/mol, 1900 g/mol, or even at least 2000 g/mol, and preferably no greater than about 30000 g/mol, 40000 g/mol, or 50000 g/mol.

Nonfluorinated free-radically polymerizable ethylenically-unsaturated compound(s) may be combined with Fluoropolymer FP to make articles according to the present disclosure. Exemplary useful nonfluorinated free-radically polymerizable ethylenically-unsaturated compounds include:

(a) di(meth)acryl containing compounds such as 1,3-butylene glycol diacrylate, 1,4-butanediol diacrylate, 1,6-hexanediol diacrylate, 1,6-hexanediol monoacrylate monomethacrylate, ethylene glycol diacrylate, polyethylene glycol (400) diacrylate (available as SR344 from Sartomer Co., Exton, Pennsylvania), alkoxylated cyclohexanedimethanol diacrylate, alkoxylated hexanediol diacrylate, alkoxylated neopentyl glycol diacrylate, caprolactone-modified neopentyl glycol hydroxypivalate diacrylate, caprolactone-modified neopentyl glycol hydroxypivalate diacrylate, cyclohexanedimethanol diacrylate, diethylene glycol diacrylate, dipropylene glycol diacrylate, ethoxylated bisphenol A diacrylate, hydroxypivalaldehyde-modified trimethylolpropane diacrylate, neopentyl glycol diacrylate, polyethylene glycol diacrylate, propoxylated neopentyl glycol diacrylate, tetraethylene glycol diacrylate, tricyclodecanedimethanol diacrylate, triethylene glycol diacrylate, and tripropylene glycol diacrylate;

(b) tri(meth)acryl containing compounds such as glycerol triacrylate, trimethylolpropane triacrylate, ethoxylated triacrylates (e.g., ethoxylated trimethylolpropane triacrylate, ethoxylated (6) trimethylolpropane triacrylate, ethoxylated (6) trimethylolpropane triacrylate, and ethoxylated (15) trimethylolpropane triacrylate), and propoxylated triacrylates (e.g., propoxylated glyceryl triacrylate, propoxylated trimethylolpropane triacrylate), trimethylolpropane triacrylate, tris(2-hydroxyethyl)isocyanurate triacrylate;

(c) higher functionality (meth)acryl containing compounds such as ditrimethylolpropane tetraacrylate, dipentaerythritol pentaacrylate, pentaerythritol triacrylate, ethoxylated pentaerythritol tetraacrylate, dipentaerythritol pentaacrylate, and caprolactone-modified dipentaerythritol hexaacrylate;

(d) and combinations thereof.

In some embodiments, the nonfluorinated free-radically polymerizable ethylenically-unsaturated compound comprises an ethoxylated poly(meth)acrylate. In some embodiments, the nonfluorinated free-radically polymerizable ethylenically-unsaturated compound comprises at least two (meth)acryl groups.

Oligomeric and/or polymeric (meth)acryl compounds such as, for example, urethane acrylates, polyester acrylates, and epoxy acrylates can also be employed.

Nonfluorinated free-radically polymerizable ethylenically-unsaturated compounds are widely available from vendors such as, for example, Sartomer Company of Exton, Pennsylvania; UCB Chemicals Corporation of Smyrna, Georgia; and Aldrich Chemical Company of Milwaukee, Wisconsin.

In some embodiments, the total amount of ethylenically-unsaturated free-radically polymerizable compounds can be, for example, at least 50, 55, 60, 65, 70, 75, 80, 85, 90, 95, or even at least 99 percent by weight, based on the combined total weight of the fluoropolymer FP, ethylenically-unsaturated free-radically polymerizable compounds, and free-radical initiator.

Solvent may be presented in the coating compositions of fluoropolymer FP and its combination with ethylenically-unsaturated free-radically polymerizable compounds and free-radical initiator. Useful solvent includes, for example, alcohol, ether, ester and ketone. Representative solvents are ethanol, isopropanol, $CH_3OCH_2CH_2OH$, $CH_3OCH(CH_3)CH_2OH$, $CH_3OCH_2CH_2CH_2OH$, tetrahydrofuran, diethyl ether, t-butyl methyl ether, acetone, methyl ethyl ketone, methyl isobutylene ketone, and methyl propyl ketone, ethyl acetate, methyl acetate, butyl acetate, isobutyl acetate, and combinations thereof.

Useful free-radical initiators include, for example, free-radical thermal initiators, free-radical photoinitiators, and combinations thereof. Free-radical curing techniques are well known in the art and include, for example, thermal curing methods as well as radiation curing methods such as electron beam or ultraviolet radiation. Details concerning free-radical thermal and photopolymerization techniques may be found in, for example, U.S. Patent Nos. 4,654,233 (Grant et al.); 4,855,184 (Klun et al.); and 6,224,949 (Wright et al.).

Useful free-radical thermal initiators include, for example, organic peroxides (e.g., benzoyl peroxide), azo compounds, quinones, nitroso compounds, acyl halides, hydrazones, mercaptans, pyrylium compounds, imidazoles, chlorotriazines, benzoin, benzoin alkyl ethers, diketones, phenones, and mixtures thereof. Examples of suitable thermal initiators are sold as VAZO 52, VAZO 64 and VAZO 67 azo compound thermal initiators from E.I. du Pont de Nemours and Co., Wilmington, Delaware.

Useful free-radical photoinitiators include, for example, benzophenone, benzoin ethers (e.g., benzoin methyl ether and benzoin isopropyl ether), hydroxypropyl phenyl ketone, substituted acetophenones (e.g., 2,2-diethoxyacetophenone, 2,2-dimethoxy-2-phenyl-1-phenylethanone, dimethoxyhydroxyacetophenone, 2-hydroxy-2-methylphenylpropan-1-one, m-chloroacetophenone), propiophenone, benzil, benzil dialkyl ketals, anthraquinone, thioxanthone, thioxanthone derivatives, acylphosphine oxides and substituted α-ketols (e.g., 2-methyl-2-hydroxypropiophenone), and mixtures thereof.

The free-radical initiator may also include an amine synergist. Useful amine synergists include reactive tertiary amines including, for example, dibutylaminoethanolamine, triethanolamine and methyldiethanolamine. Useful amine synergists are commercially available under the trade designations LAROMER LR 8956 from BASF and TEOA from Dow Chemical, Midland, Michigan, and reactive amine co-initiators commercially available under the trade designations CN 383 and CN 384 from Sartomer Co., Exton, Pennsylvania.

Examples of useful commercially available photoinitiators include: α-hydroxyketones available as IRGACURE 184, DAROCUR 1173, IRGACURE 2959, and IRGACURE 1000 from Ciba Specialty Chemicals, Tarrytown, New York; α-aminoketones available as IRGACURE 907, IRGACURE 369 and IRGACURE 1300 from Ciba Specialty Chemicals, benzil dialkyl ketals available under the trade designations IRGACURE 651 from Ciba Specialty Chemicals, and KB-1 from Sartomer Co.; acylphosphine oxides available as IRGACURE 819, IRGACURE 700, IRGACURE 1800, IRGACURE 1850 and IRGACURE 4265 from Ciba Specialty Chemicals and LUCIRIN TPO and LUCIRIN TPO-L from BASF, Florham Park, New Jersey; and benzophenones available under the trade designations DAROCUR BP from Ciba Specialty Chemicals. Other useful commercially available photoinitiators include polymeric photoinitiators available under the trade designations KIP 150 F and KIP 100 F from Sartomer Co.

The free-radical initiator is present in an effective amount (i.e., at least sufficient quantity to effect at least partial curing of the curable antifouling composition. Typically, the free-radical initiator comprises from 0.01, 0.1, or even from 0. 5 percent up to 5 or 10 percent based on the combined total weight of the fluoropolymer FP, ethylenically-unsaturated free-radically polymerizable compounds, and free-radical initiator. In some embodiments, the weight ratio of fluoropolymer FP to the free-radical initiator is in the range of from 99:5 to 99:1.

In some embodiments, fluoropolymer FP comprises at least 50 percent of the total weight of fluoropolymer FP, nonfluorinated free-radically polymerizable ethylenically-unsaturated compound, and free-radical initiator combined.

While the antifouling properties of coatings resulting from at least partial curing of fluoropolymer FP were previously unknown, the present inventors have now discovered that they indeed may have beneficial antifouling properties with respect to one or more microorganisms. For example, in some embodiments, biofouling may be reduced by at least a factor of 1.1, 1.5, 2, 3, 4, 5, 6, 7, 8, 9, 10, or more depending on the microorganism and test method selected.

The term "microorganism" is generally used to refer to any prokaryotic or eukaryotic microscopic organism, including without limitation, one or more of bacteria (e.g., motile or vegetative, Gram positive or Gram negative), bacterial spores or endospores, algae (e.g., *Navicula incerta),* fungi (e.g., yeast, filamentous fungi, fungal spores), mycoplasmas, and protozoa, as well as combinations thereof. In some cases, the microorganisms of particular interest are those that are pathogenic, and the term "pathogen" is used to refer to any pathogenic microorganism. Examples of pathogens can include, but are not limited to, both Gram positive and Gram negative bacteria, fungi, and viruses including members of the family *Enterobacteriaceae,* or members of the family *Micrococaceae,* or the genera *Staphylococcus* spp., *Streptococcus,* spp., *Pseudomonas* spp., *Enterococcus* spp., *Salmonella* spp., *Legionella* spp., *Shigella* spp., *Yersinia* spp., *Enterobacter* spp., *Escherichia* spp., *Bacillus* spp., *Listeria* spp., *Campylobacter* spp., *Acinetobacter* spp., *Vibrio* spp., *Clostridium* spp., *Klebsiella* spp., *Proteus* spp. and *Corynebacterium* spp. Particular examples of pathogens can include, but are not limited to, *Escherichia coli* including enterohemorrhagic *E. coli* e.g., serotype O157:H7, O129:H11; *Pseudomonas aeruginosa; Bacillus cereus; Bacillus anthracis; Salmonella enteritidis; Salmonella enterica* serotype Typhimurium; *Listeria monocytogenes; Clostridium botulinum; Clostridium perfringens; Staphylococcus aureus;* methicillin-resistant *Staphylococcus aureus; Campylobacter jejuni; Yersinia enterocolitica; Vibrio vulnificus; Clostridium difficile;* vancomycin-resistant *Enterococcus; Klebsiella pnuemoniae; Proteus mirabilus* and *Enterobacter [Cronobacter] sakazakii.*

Accordingly, curable antifouling compositions according to the present disclosure are useful, for example, for making an article. In a typical such method, a curable antifouling composition according to the present disclosure is applied to (e.g., coated on, or in the case of a self-supporting film laminated to) at least a portion of a surface of a substrate, then the curable antifouling composition is at least partially cured (e.g., typically at least sufficiently cured to achieve a durable film).

The curable antifouling composition may be applied to the substrate using any suitable technique including, for example, dip coating, forward and reverse roll coating, wire wound rod coating, and die coating. Die coaters include

knife coaters, slot coaters, slide coaters, fluid bearing coaters, slide curtain coaters, drop die curtain coaters, and extrusion coaters among others. Optionally, but typically, at least a portion (including all) of any volatile organic solvents are removed prior to any curing of the curable antifouling composition.

After application, the curable antifouling composition is at least partially cured; for example, as described elsewhere herein. The thickness of the resulting antifouling composition is typically at least 0.5 microns, preferably at least 1 micron, and more preferably at least 2 microns, although this is not a requirement. Preferably, the thickness ranges from 3 microns to 5 microns, although other thicknesses may also be used.

Antifouling compositions according to the present disclosure are especially useful as protective coating on substrates included in articles that are subjected to prolonged exposure to water. For example, as shown in FIG. 1 exemplary article 100 comprises pipe 110 with antifouling coating 120 disposed on its inner surface 115.

Exemplary substrates include marine vessel hulls, anchors, piers, docks, caissons, invasive medical devices (e.g., including prosthetic heart valves, urinary catheters, venous catheters, endotracheal tubes, and orthopedic implants), non-invasive medical devices (e.g., medical examination tables, wound dressings, and stethoscopes), handrails, door knobs, countertops, membrane support frames, heat exchangers, microelectrochemical drug delivery devices, and papermaking machines, tanks for holding liquid (e.g., bioreactor tanks, water storage tanks, totes, and cisterns), and mariculture apparatuses (e.g., cages, pens, and baskets). Useful substrates also include plumbing (e.g., pipes and tubing for conveying water) and plumbing fixtures. Plumbing is the system of pipes and drains for the distribution of water (e.g., potable water) and the removal of waterborne wastes. Plumbing fixtures include, e.g., bidets, channel drains, drinking fountains, sinks, toilets, urinals, showers, bathtubs, and faucets.

SELECT EMBODIMENTS OF THE PRESENT DISCLOSURE

In a first embodiment, the present disclosure provides a curable antifouling composition comprising components:

a) at least one fluorinated polymer, wherein each said at least one fluorinated polymer independently comprises:

m divalent groups represented by the formula

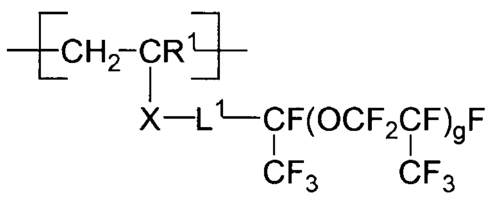

wherein $R^1$ independently represents H or methyl, X independently represents a covalent bond or a divalent organic linking group, $L^1$ independently represents a covalent bond or a divalent organic linking group, m represents a positive integer, and g independently represents an integer in the range of from 3 to 40, inclusive;
n divalent groups represented by the formula

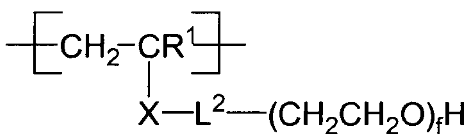

wherein $L^2$ independently represents a covalent bond or divalent organic linking group, n represents a positive integer; and f independently represents an integer in the range of from 3 to 200, inclusive;
p divalent groups represented by the formula

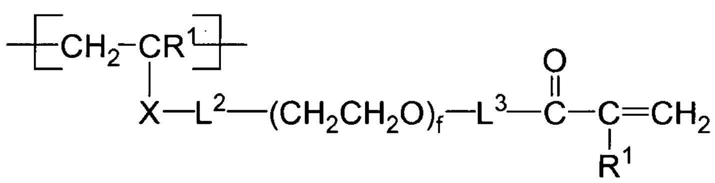

wherein p represents a positive integer, and wherein $L^3$ represents a covalent bond or a divalent organic linking group; and

b) a nonfluorinated free-radically polymerizable ethylenically-unsaturated compound; and
c) an effective amount of free-radical initiator,

wherein component a) comprises at least 50 percent of the total weight of components a), b), and c) combined.

In a second embodiment, the present disclosure provides a curable antifouling composition according to the first embodiment, wherein the free-radical initiator comprises at least one photoinitiator.

In a third embodiment, the present disclosure provides a curable antifouling composition according to the first or second embodiment, wherein g is in a range of from 5 to 40.

In a fourth embodiment, the present disclosure provides a curable antifouling composition according to any one of the first to third embodiments, wherein f is in a range of from 5 to 68.

In a fifth embodiment, the present disclosure provides a curable antifouling composition according to any one of the first to fourth embodiments, wherein components a) and c) are present in a weight ratio of from 95:5 to 99:1.

In a sixth embodiment, the present disclosure provides a curable antifouling composition according to any one of the first to fifth embodiments, wherein the ratio of m to (n + p) is in a range of from 60:40 to 5:95.

In a seventh embodiment, the present disclosure provides a curable antifouling composition according to any one of the first to sixth embodiments, wherein the ratio of n to p is in a range of from 2:98 to 90:10.

In an eighth embodiment, the present disclosure provides a curable antifouling composition according to any one of the first to seventh embodiments, wherein the nonfluorinated free-radically polymerizable ethylenically-unsaturated compound comprises an ethoxylated poly(meth)acrylate.

In a ninth embodiment, the present disclosure provides a curable antifouling composition according to any one of the first to eighth embodiments, wherein the nonfluorinated free-radically polymerizable ethylenically-unsaturated compound comprises at least two (meth)acryl groups.

In a tenth embodiment, the present disclosure provides a method of using a curable antifouling composition, the method comprising:

applying a curable antifouling composition to at least a portion of a surface of a substrate, wherein the substrate is selected from the group consisting of marine vessel hulls, anchors, piers, docks, caissons, invasive medical devices, non-invasive medical devices, handrails, door knobs, countertops, membrane support frames, heat exchangers, microelectrochemical drug delivery devices, papermaking machines, tanks for holding liquid, water pipes, plumbing fixtures, and mariculture apparatuses; and
at least partially curing the curable antifouling composition, wherein the curable antifouling composition comprises:

a) at least one fluorinated polymer, wherein each said at least one fluorinated polymer independently comprises the components:

m divalent groups represented by the formula

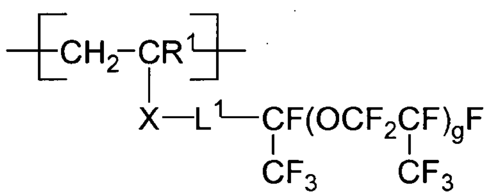

wherein $R^1$ independently represents H or methyl, X independently represents a covalent bond or a divalent organic linking group, $L^1$ independently represents a covalent bond or a divalent organic linking group, m represents a positive integer, and g independently represents an integer in the range of from 3 to 40, inclusive;
n divalent groups represented by the formula

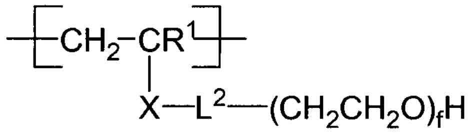

wherein $L^2$ independently represents a covalent bond or divalent organic linking group, n represents a positive integer; and f independently represents an integer in the range of from 3 to 200, inclusive;
p divalent groups represented by the formula

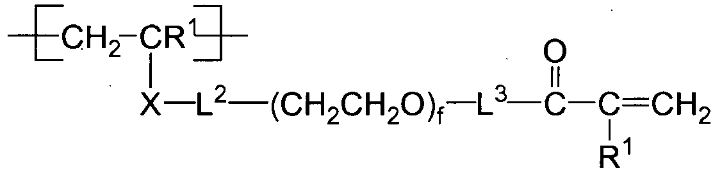

wherein p represents a positive integer, and wherein $L^3$ represents a covalent bond or a divalent organic linking group; and

b) an effective amount of free-radical initiator.

In an eleventh embodiment, the present disclosure provides a method according to the tenth embodiment, wherein the free-radical initiator comprises at least one photoinitiator.
In a twelfth embodiment, the present disclosure provides a method according to the tenth or eleventh embodiment, wherein g is in a range of from 5 to 40.
In a thirteenth embodiment, the present disclosure provides a method according to any one of the tenth to twelfth embodiments, wherein f is in a range of from 5 to 68.
In a fourteenth embodiment, the present disclosure provides a method according to any one of the tenth to thirteenth embodiments, wherein the curable antifouling composition further comprises:

c) a nonfluorinated free-radically polymerizable ethylenically-unsaturated compound.

In a fifteenth embodiment, the present disclosure provides an article comprising a substrate having a surface, wherein at least a portion of the surface has an antifouling coating thereon, wherein the substrate is selected from the group consisting of marine vessel hulls, anchors, piers, docks, caissons, invasive medical devices, non-invasive medical devices, handrails, door knobs, countertops, membrane support frames, heat exchangers, microelectrochemical drug delivery devices, papermaking machines, tanks for holding liquid, water pipes, plumbing fixtures, and mariculture apparatuses, wherein the antifouling coating comprises an at least partially cured curable antifouling composition, and wherein the curable antifouling composition comprises components:

a) at least one fluorinated polymer, wherein each said at least one fluorinated polymer independently comprises:

m divalent groups represented by the formula

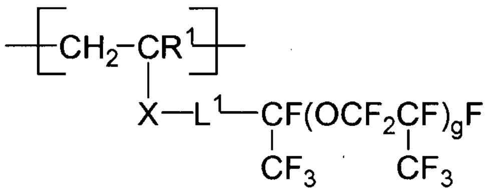

wherein $R^1$ independently represents H or methyl, X independently represents a covalent bond or a divalent organic linking group, $L^1$ independently represents a covalent bond or a divalent organic linking group, m represents a positive integer, and g independently represents an integer in the range of from 3 to 40, inclusive;
n divalent groups represented by the formula

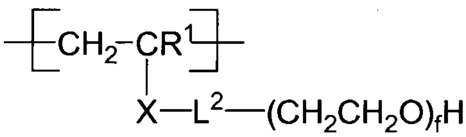

wherein $L^2$ independently represents a covalent bond or divalent organic linking group, n represents a positive integer; and f independently represents an integer in the range of from 3 to 200, inclusive;
p divalent groups represented by the formula

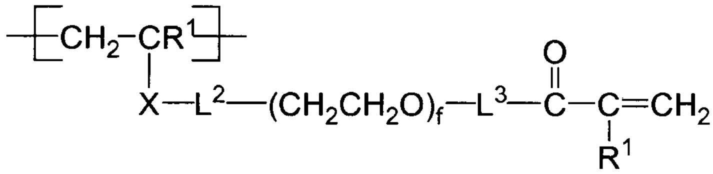

wherein p represents a positive integer, and wherein $L^3$ represents a covalent bond or a divalent organic linking group; and

b) an effective amount of free-radical initiator.

In a sixteenth embodiment, the present disclosure provides an article according to the fifteenth embodiment, wherein the free-radical initiator comprises at least one photoinitiator.
In a seventeenth embodiment, the present disclosure provides an article according to the fifteenth or sixteenth embodiment, wherein g is in a range of from 5 to 40.
In an eighteenth embodiment, the present disclosure provides an article according to any one of the fifteenth to seventeenth embodiments, wherein f is in a range of from 5 to 68.
In a nineteenth embodiment, the present disclosure provides an article according to any one of the fifteenth to eighteenth embodiments, wherein the curable antifouling composition further comprises:

c) a nonfluorinated free-radically polymerizable ethylenically-unsaturated compound.

In a twentieth embodiment, the present disclosure provides an article according to any one of the fifteenth to nineteenth embodiments, wherein the curable antifouling composition further comprises a nonfluorinated free-radically polymerizable ethylenically-unsaturated compound.
In a twenty-first embodiment, the present disclosure provides an article according to the twentieth embodiment, wherein the nonfluorinated free-radically polymerizable ethylenically-unsaturated compound comprises an ethoxylated poly(meth)acrylate.
In a twenty-second embodiment, the present disclosure provides an article according to the twentieth embodiment, wherein the nonfluorinated free-radically polymerizable ethylenically-unsaturated compound comprises at least three (meth)acryl groups.
In a twenty-third embodiment, the present disclosure provides an article according to any one of the fifteenth to twenty-second embodiments, wherein the ratio of m to (n + p) is in a range of from 60:40 to 5:95.
In a twenty fourth embodiment, the present disclosure provides an article according to any one of the fifteenth to twenty third embodiments, wherein the ratio of n to p is in a range of from wherein the ratio of n to p is in a range of from 2:98 to 90:10.
Objects and advantages of this disclosure are further illustrated by the following non-limiting examples, but the particular materials and amounts thereof recited in these examples, as well as other conditions and details, should not be construed to unduly limit this disclosure.

## EXAMPLES

Unless otherwise noted, all parts, percentages, ratios, etc. in the Examples and the rest of the specification are by weight.
The following designations are used in the Examples: "AM" refers to acrylic monomer or oligomer; "HC" refers to hard coat; "I" refers to initiator; "S" refers to solvent; "C" refers to catalyst, and "CT" refers to chain transfer agent.

## ABBREVIATIONS USED IN THE EXAMPLES

| | |
|---|---|
| S1 | ACS reagent grade (>99.5%) ethyl acetate, product #319902, Sigma-Aldrich Corp., St. Louis, Missouri. |
| S2 | ACS reagent grade (>99%) 2-butanone, product #360473, Sigma-Aldrich Corp. |

AM1 $F(CF(CF_3)CF_2O)_{6\cdot 84}CF(CF_3)C(=O)NHCH_2CH_2OC(=O)C(CH_3)=CH_2$, average molecular weight of 1344 grams/mole (g/mol), prepared generally according to the procedure described in U.S. Patent Appl. Publ. No. 2004/0077775 A1 (Audenaert et al.).

AM2 Poly(ethylene glycol) methacrylate, $M_n$ = ~360 g/mol, product #409537, Sigma-Aldrich Corp.

AM3 2-Isocyanatoethyl methacrylate ($OCNCH_2CH_4OC(=O)CCH_3=CH_2$), 98% containing < 0.1% BHT as inhibitor, Sigma-Aldrich Corp.

AM4 Dipentaerythritol pentaacrylate, SR399, Sartomer USA, Exton, Pennsylvania.

AM5 Polyethylene glycol diacrylate monomer, SR344, Sartomer USA.

AM6 Ethoxylated (15) trimethylolpropane triacrylate monomer, SR9035, Sartomer USA.

AM7 Poly(ethylene glycol) acrylate, average $M_n$ = 375 g/mol containing 1000-1500 ppm MEHQ as inhibitor, product #469823, Sigma-Aldrich Corp.

C1 Dibutyltin dilaurate, product #291234, Sigma-Aldrich Corp.

CT1 Gamma-mercaptopropyltrimethoxysilane chain transfer agent, SILQUEST A-189, Momentive Performance Materials Holdings, Inc., Columbus, Ohio.

HC1 Abrasion resistant UV curable silicone hardcoat resin, UVHC8558, Momentive Performance Materials Holdings, Inc.

HC2 Abrasion resistant silica-modified UV curable silicone hardcoat resin, UVHC7000, Momentive Performance Materials Holdings, Inc.

HC3 Clear, solvent-based, abrasion resistant silica-modified UV curable silicone hardcoat resin, UVHC3000, Momentive Performance Materials Holdings, Inc.

I1 2,2'-Azobis(2-methylbutyronitrile) thermally activated free-radical initiator, VAZO 67 initiator, E. I. du Pont de Nemours and Co., Wilmington, Delaware.

I2 2-hydroxy-2-methyl-1-phenylpropane-1-one photoinitiator, DAROCUR 1173, Ciba Specialty Chemicals Corporation, Tarrytown, New York.

Bacterial stock cultures (*S. epidermidis* (ATCC# 35984) and *E. coli* (ATCC# 12435)) were obtained from The American Type Culture Collection, Manassas, Virginia.

*Navicula incerta* diatom is a natural isolate obtained from the Callows group, University of Birmingham, Birmingham, England.

PREPARATION OF POLYMERS P1 - P6

Polymer P1 was prepared by charging a 4-ounce bottle equipped with a magnetic stir bar with 4.0 grams (g) of AM1, 6.0 g of AM2, 0.5 g of CT1, 0.29 g of P1, and 40 g of S1. The solution was bubbled with nitrogen for one minute. The bottle was sealed and the solution was polymerized at 70°C for 24 hours with constant stirring. After cooling the solution to about room temperature, 2.2 g of AM3 and 0.11 g of C1 were added. The resulting solution was stirred at 70°C for 2 hours, yielding a clear solution polymer with ~25% solids by weight. GPC analysis showed the polymer having $M_w$ = 16800 g/mol; $M_n$ = 8610 g/mol, and P = 1.95.

Polymers P2 - P6 were prepared according to the same procedure, except that the compositions were varied as shown in Table 1. The solutions contained about 25% solids by weight. In Table 1, Polymers P1b - P1d were prepared in separate batches and/or in different scales according to the method for preparing P1. Table 2 reports properties of P1 to P6 based on gel permeation chromatography (GPC) analysis.

TABLE 1

| POLYMER | POLYMER COMPOSITION, parts by weight | | | | | | | | % SOLIDS |
|---|---|---|---|---|---|---|---|---|---|
| | AM1 | AM2 | AM3 | AM7 | CT1 | C1 | I1 | S1 | |
| P1a | 4 | 6 | 2.2 | 0 | 0.5 | 0.11 | 0.29 | 40 | 24.7 |
| P1b | 4 | 6 | 2.2 | 0 | 0.5 | 0.11 | 0.29 | 40 | 24.7 |
| Pic | 4 | 6 | 2.2 | 0 | 0.5 | 0.11 | 0.29 | 40 | 24.7 |
| P1d | 4 | 6 | 2.2 | 0 | 0.5 | 0.11 | 0.29 | 40 | 24.7 |
| P2 | 3 | 7 | 2.8 | 0 | 0.5 | 0.11 | 0.29 | 40 | 25.5 |
| P3 | 4 | 6 | 2.4 | 0 | 0.5 | 0.11 | 0.29 | 40 | 25.0 |
| P4 | 4.8 | 5.2 | 2.0 | 0 | 0.5 | 0.11 | 0.29 | 40 | 24.4 |

(continued)

| POLYMER | POLYMER COMPOSITION, parts by weight | | | | | | | | % SOLIDS |
|---|---|---|---|---|---|---|---|---|---|
| | AM1 | AM2 | AM3 | AM7 | CT1 | C1 | I1 | S1 | |
| P5 | 4 | 0 | 2.5 | 6 | 0.1 | 0.11 | 0.29 | 40 | 24.5 |
| P6 | 4 | 6 | 2.5 | 0 | 0.13 | 0.11 | 0.29 | 40 | 24.6 |

TABLE 2

| POLYMER | WEIGHT AVERAGE MOLECULAR WEIGHT, $M_w$, g/mol | NUMBER AVERAGE MOLECULAR WEIGHT, $M_n$, g/mol | POLYDISPERSITY |
|---|---|---|---|
| P1a | 16800 | 8610 | 1.95 |
| P2 | 12800 | 7380 | 1.74 |
| P3 | 18300 | 9420 | 1.94 |
| P5 | 28400 | 14600 | 1.95 |
| P6 | 27100 | 17700 | 1.53 |

EXAMPLES 1 - 28

Coating solutions having the compositions reported in Tables 3A and 3B were prepared by mixing 3% I2 photoinitiator (prepared as a 10% solids solution in S2) with the polymer solutions P1 - P6, and diluting to 20% solids with S1.

The coating solutions were coated onto the primed side of a polyester (PET) film (MELINEX 618, E. I. du Pont de Nemours and Co.) using a #12 wire-wound rod (RD Specialties, Webster, New York). The coated films were dried in an oven set at 90°C for 1 minute, and then cured in a nitrogen atmosphere using a UV light processor (LIGHT-HAMMER 6 UV, Fusion UV Systems Inc., Gaithersburg, Maryland) equipped with an H-bulb at 100% lamp power. The films were cured using 2 passes through the UV processor at a line speed of 30 feet/minute (9.1 m/min).

TABLE 3A

| EXAMPLE | COATING FORMULATION, PERCENT BY WEIGHT | | | | | | | | | | | |
|---|---|---|---|---|---|---|---|---|---|---|---|---|
| | P1a | P1b | P1c | P2 | P3 | P4 | P5 | P6 | AM4 | AM5 | I2 | S2 |
| 1 | 97.00 | | | | | | | | | | 0.30 | 2.70 |
| 2 | | | | 97.00 | | | | | | | 0.30 | 2.70 |
| 3 | | | | | 97.00 | | | | | | 0.30 | 2.70 |
| 4 | | | | | | 97.00 | | | | | 0.30 | 2.70 |
| 5 | | | | | | | 97.00 | | | | 0.30 | 2.70 |
| 6 | | | | | | | | 97.00 | | | 0.30 | 2.70 |
| 7 | | 97.00 | | | | | | | | | 0.30 | 2.70 |
| 8 | | | 97.00 | | | | | | | | 0.30 | 2.70 |
| 9 | | | | | 19.40 | | | | | 77.60 | 0.30 | 2.70 |
| 10 | | | | | 38.80 | | | | | 58.20 | 0.30 | 2.70 |
| 11 | | | | | 58.20 | | | | | 38.80 | 0.30 | 2.70 |
| 12 | | | | | 77.60 | | | | | 19.40 | 0.30 | 2.70 |
| 13 | | | | | 87.30 | | | | | 9.70 | 0.30 | 2.70 |
| 14 | | | | | 92.15 | | | | | 4.85 | 0.30 | 2.70 |

(continued)

| EXAMPLE | COATING FORMULATION, PERCENT BY WEIGHT | | | | | | | | | | | |
|---|---|---|---|---|---|---|---|---|---|---|---|---|
| | P1a | P1b | P1c | P2 | P3 | P4 | P5 | P6 | AM4 | AM5 | I2 | S2 |
| 15 | | | | | | | | 87.30 | | 9.70 | 0.30 | 2.70 |
| 16 | | | | | | | 87.30 | | | 9.70 | 0.30 | 2.70 |
| 17 | | | 87.30 | | | | | | | 9.70 | 0.30 | 2.70 |
| 18 | | | | | | | | 48.50 | 24.25 | 24.25 | 0.30 | 2.70. |
| 19 | | | | | | | | 72.75 | 12.13 | 12.13 | 0.30 | 2.70 |
| 20 | | | | | | | | 24.25 | 36.38 | 36.38 | 0.30 | 2.70 |

TABLE 3B

| EXAMPLE | COATING FORMULATION, PERCENT BY WEIGHT | | | | | | | |
|---|---|---|---|---|---|---|---|---|
| | $P1_b$ | $P1_d$ | AM6 | HC1 | HC2 | HC3 | I2 | S2 |
| 21 | | 97.00 | | | | | 0.30 | 2.70 |
| 22 | 77.60 | | 19.40 | | | | 0.30 | 2.70 |
| 23 | 48.50 | | 48.50 | | | | 0.30 | 2.70 |
| 24 | 9.70 | | 87.30 | | | | 0.30 | 2.70 |
| 25 | 0.97 | | 96.03 | | | | 0.30 | 2.70 |
| 26 | 0.97 | | | 96.03 | | | 0.30 | 2.70 |
| 27 | 0.97 | | | | 96.03 | | 0.30 | 2.70 |
| 28 | 0.97 | | | | | 96.03 | 0.30 | 2.70 |

*TESTING OF COATED FILMS AND RESULTS*

*TEST METHOD 1: COMBINATORIALIHIGH THROUGHPUT RAPID ASSESSMENT OF BACTERIAL (Escherichia coli AND Staphylococcus epidermidis) BIOFILMRETENTION*

To facilitate the evaluation of a large number of test materials, samples were evaluated for the retention of bacterial biofilm grown under low shear conditions using a high-throughput assay. Prior to testing for biofilm retention, residual components that could potentially leach from test materials and interfere with the biological assays designed to characterize their performance were extracted into 1 mL phosphate buffered saline for 24 hours. Extracts were used to conduct a leachate toxicity assay as follows: After extraction, 0.05 mL of a bacterial suspension (*S. aureus* or *E. coli* at approximately $10^8$ cells/rnL) was added to 0.9 mL of coating leachate supplemented with 0.1 mL growth medium (Tryptic Soy Broth (TSB) or M63D). Subsequently, 0.2 mL of the resulting liquid was transferred in triplicate to a sterile 96-well plate, incubated for 24h at 37°C, and assessed for bacterial growth by measuring absorbance at 600 nm using a TECAN SAFIRE2 multi-well plate reader. Samples were then tested for biofilm retention against *S. epidermidis* (ATCC# 35984) and *E. coli* (ATCC# 12435) such that one control well (growth medium only) and one replicate sample well (growth medium + bacteria) were evaluated for each material against each bacterial species. To grow biofilms, *S. epidermidis* and *E. coli* were first re-suspended to a final cell density of $10^8$ cells/mL in TSBD and M63D, respectively, and 1.0 mL of the bacterial suspension was then added to each test well of the array plate. After static incubation at 37°C for 24 hours, wells were rinsed three times with 1.0 mL deionized water to remove planktonic or loosely attached cells. Biofilm retained on the surface was then stained with crystal violet (0.3% solution), after which the surfaces were rinsed three times with 1.0 mL deionized water and air dried for at least one hour. To quantify the amount of biofilm on the surface, crystal violet was extracted into 0.5 mL 33% glacial acetic acid for 15 minutes and the absorbance at 600 nm was recorded using a TECAN SAFIRE2 multi-well plate reader.

*TEST METHOD 2: ASSESSMENT OF BIOFILM FORMATION BY STAPHYLOCOCCUS EPIDERMIDIS IN CDC BIOFILM REACTOR*

The ability of samples to resist biofilm formation by *S. epidermidis* (ATCC# 35984) in a high shear environment was evaluated using the CDC biofilm reactor and polycarbonate coupons (Biosurface Technologies, Bozeman, Montana). The CDC reactor accommodates twenty-four individual coupons, with three coupons placed in each of eight coupon holders. To evaluate coated films, six discs (1/2 inch (1.3 cm) in diameter) were cut from each sample material. The discs were attached to both faces of three polycarbonate coupons using double-sided tape, and the coupons carrying replicate samples of one test material were then placed into one coupon holder.

The reactor system was sterilized prior to each test as follows: first, a CDC reactor from which the coupon holders were removed was autoclaved and allowed to cool. Subsequently, the coupon holders carrying sample materials were sterilized by immersing in isopropyl alcohol and placed into the sterilized CDC reactor. The reactor was filled with approximately 350 mL of sterile dilute Bacto Tryptic Soy Broth (TSB, Becton, Dickinson and Co., Sparks, Maryland). In these experiments, 8% TSB (24 g TSB /10 L) was used. The reactor was inoculated with 0.4 mL of an overnight culture of *S. epidermidis* grown in TSB at 37°C. The stir rate was set to 130 RPM, and the system was incubated at 37°C for 24h as a batch culture to allow growth and attachment of bacteria. After 24 h, sterile 8% TSB was passed through the reactor at a rate of approximately 11.5 mL/ min for an additional 24 hours (with continued stirring at 130 RPM and incubation at 37°C) to facilitate biofilm growth.

To analyze biofilm formation, each coupon was placed into a 15 mL conical tube containing 2 mL 0.05N NaOH. After vortexing each sample for 15 seconds, the absorbance at 510 nm of each sample was measured and recorded using a spectrophotometer (model LAMBDA 12, Perkin-Elmer Corporation, Waltham, Massachusetts).

Absorbance measurements used to quantify biofilms grown in the CDC reactor (at 510 nm) are not directly comparable to absorbance measurements (at 600 nm) for biofilms grown according to Test Method 1, since the biofilms were grown under different conditions (high vs. low shear) and quantified using different methods (optical density for biomass vs. crystal violet absorbance)

*TEST METHOD 3: COMBINATORIAL/HIGH THROUGHPUT ASSESSMENT OF FOULING RELEASE USING NAVICULA INCERTA*

To facilitate the evaluation of a large number of test materials, samples were evaluated for fouling release performance using a high-throughput water jet assay. Prior to testing for fouling release, samples were immersed in tap water for 14 days to remove residual components that could potentially leach from test materials and interfere with the biological assays designed to characterize their performance. Samples were inoculated with 1.0 mL of a suspension of the marine diatom *Navicula incerta* at $10^5$ cells/mL in F/2 medium (Guillard R.R.L. and Ryther J. H. in "Studies of Marine Planktonic Diatoms: I. Cyclotella nana Hustedt and Detonula confervacea (cleve) Gran", Canadian Journal of Microbiology (1962), 8(2), pp. 229-239) and incubated at ambient laboratory conditions for 2 hours. After incubation, the samples were exposed to water jetting as follows: The first column of each coating was not treated with the water jet and served as the measure of cell attachment of *N. incerta* on the sample surface. The second and third column of each coating was jetted for 5 seconds at respective pressures of 10 psi (69 kPa) and 20 psi (138 kPa), respectively. After water jetting, 1.0 mL of dimethyl sulfoxide (DMSO) was immediately added to each well and the plates were incubated in darkness for 30 min. Gentle shaking was applied to generate a homogeneous solution, and 0.2 ml of the solution was transferred to a 96-well plate for fluorescence measurements of chlorophyll using a multi-well plate spectrophotometer (SAFIRE2 from Tecan, Männedorf, Switzerland) excitation wavelength: 360 nm, emission wavelength: 670 nm). The percentage removal was determined as the difference in relative fluorescence units (RFU) between the coating replicates that were exposed to the water-jet and those which were not.

*FIG URE OF MERIT*

Antifouling and fouling release coating performance was assessed comparatively using a Figure of Merit. The value and its corresponding standard deviation were determined as shown below.

$$Figure\ of\ Merit = X_2 - X_1$$

$$\sigma_{Figure\ of\ Merit} = \sqrt{\frac{\sigma_2^2}{n_2} + \frac{\sigma_1^2}{n_1}}$$

wherein:

$X_1$ = average absorbance or optical density or percent removal for the test surface;
$\sigma_1$ = standard deviation of absorbance or optical density or percent removal for test surface;
$n_1$ = number of replicates of test surface;
$X_2$ = average absorbance or optical density or percent removal for a control surface without antifouling coating;
$\sigma_2$ = standard deviation of absorbance or optical density or percent removal for control surface; and
$n_2$ = number of replicates of control surface

Additionally, in cases where one sample material was evaluated in multiple separate experiments, the mean and pooled standard deviation were first determined across experiments before the Figure of Merit and its corresponding standard deviation were calculated as described above. The pooled standard deviation is defined as

$$\sigma_{pooled} = \sqrt{\frac{(n_i - 1)\sigma_i^2 + (n_{i+1} - 1)\sigma_{i+1}^2 + \dots}{n_i + n_{i+1} + \dots - 2}}$$

wherein:

$\sigma_i$ = standard deviation of the i-th set of measurements for a given surface; and
$n_i$ = number of replicates of a given surface in the i-th set.

Table 4 reports results of testing of Examples using Test Method 1. In cases of single sample measurements standard deviation of the Figure of merit is not applicable, and hence not reported in Table 4. Table 5 reports results of testing of Examples using Test Method 2.
Table 6 reports results of testing of Examples using Test Method 3. Each number in Table 5 and 6 is the average result of three separated samples tested. Any positive number in the Figure of Merit within Table 4 and Table 5 means an antifouling effect was observed. The bigger numbers indicate the bigger difference in comparison with the control, and are better in antifouling performance in each test method.

TABLE 4

| EXAMPLE | *S. epidermidis,* FIGURE OF MERIT | *E. coli,* FIGURE OF MERIT |
|---|---|---|
| 1 | 1.077 | 1.552 |
| 2 | 1.646 | 0.572 |
| 3 | 0.246 | -0.022 |
| 4 | 0.894 | 0.684 |
| 5 | 0.727 | 0.378 |
| 6 | 0.542 | 0.768 |
| 7 | 1.356 | 1.705 |
| 8 | 0.520 | 0.130 |
| 9 | 0.979 | 0.326 |
| 10 | 1.210 | 0.410 |
| 11 | 1.015 | 0.544 |
| 12 | 0.850 | 0.307 |
| 13 | 1.001 | 0.280 |

(continued)

| EXAMPLE | *S. epidermidis,* FIGURE OF MERIT | *E. coli,* FIGURE OF MERIT |
|---|---|---|
| 14 | 0.999 | 0.437 |
| 15 | 0.887 | 0.706 |
| 16 | 0.081 | 0.489 |
| 17 | -0.071 | 0.647 |
| 18 | 0.689 | 0.743 |
| 19 | 0.964 | 0.989 |
| 20 | 0.599 | 0.546 |
| 21 | 0.816 | 1.227 |
| 22 | 0.600 | 0.597 |
| 23 | 0.737 | 0.578 |
| 24 | 0.737 | 0.102 |
| 25 | 0.503 | 0.181 |
| 26 | 0.130 | 0.250 |
| 27 | 0.002 | 0.643 |
| 28 | -0.067 | 1.137 |

TABLE 5

| EXAMPLE | *S. epidermidis,* FIGURE OF MERIT | *S. epidermidis,* FIGURE OF MERIT, Standard Deviation |
|---|---|---|
| 1 | 0.921 | 0.205 |
| 2 | 0.306 | 0.037 |
| 3 | 0.371 | 0.063 |
| 4 | 0.771 | 0.274 |
| 5 | 0.624 | 0.027 |
| 6 | 0.649 | 0.013 |
| 7 | 0.830 | 0.085 |
| 8 | 0.243 | 0.190 |
| 9 | 0.385 | 0.047 |
| 10 | 0.194 | 0.047 |
| 11 | 0.368 | 0.056 |
| 12 | 0.845 | 0.077 |
| 13 | 0.804 | 0.350 |
| 14 | 0.932 | 0.234 |
| 15 | 0.137 | 0.224 |
| 16 | 0.196 | 0.145 |
| 17 | 0.005 | 0.125 |
| 21 | 0.721 | 0.165 |
| 22 | 0.463 | 0.097 |

(continued)

| EXAMPLE | *S. epidermidis,* FIGURE OF MERIT | *S. epidermidis,* FIGURE OF MERIT, Standard Deviation |
|---|---|---|
| 23 | 0.534 | 0.101 |
| 24 | 0.518 | 0.101 |
| 25 | 0.509 | 0.098 |

TABLE 6

| EXAMPLE | *N. incerta* GROWTH, Figure of Merit | *N. incerta* GROWTH, Figure of Merit, Standard Deviation | *N. incerta* 10 PSI REMOVAL, Figure of Merit | *N. incerta* 10 PSI REMOVAL, Figure of Merit, Standard Deviation | *N. incerta* 20 PSI REMOVAL, Figure of Merit | *N. incerta* 20 PSI REMOVAL, Figure of Merit, Standard Deviation |
|---|---|---|---|---|---|---|
| 1 | 1194 | 1118 | 28.4 | 5.6 | 37.9 | 3.2 |
| 7 | 4056 | 3162 | 61.7 | 1.6 | 53.6 | 3.2 |
| 21 | 2401 | 2764 | 31.2 | 5.2 | 38.4 | 4.3 |

Other modifications and variations to the present disclosure may be practiced by those of ordinary skill in the art, without departing from the spirit and scope of the present disclosure, which is more particularly set forth in the appended claims. It is understood that aspects of the various embodiments may be interchanged in whole or part or combined with other aspects of the various embodiments. All cited references, patents, or patent applications in the above application for letters patent are herein incorporated by reference in their entirety in a consistent manner. In the event of inconsistencies or contradictions between portions of the incorporated references and this application, the information in the preceding description shall control. The preceding description, given in order to enable one of ordinary skill in the art to practice the claimed disclosure, is not to be construed as limiting the scope of the disclosure, which is defined by the claims and all equivalents thereto.

## Claims

**1.** A curable antifouling composition comprising components:

a) at least one fluorinated polymer, wherein each said at least one fluorinated polymer independently comprises:

m divalent groups represented by the formula

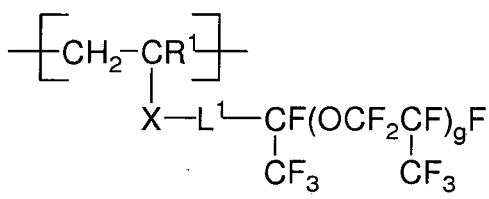

wherein $R^1$ independently represents H or methyl, X independently represents a covalent bond or a divalent organic linking group, $L^1$ independently represents a covalent bond or a divalent organic linking group, m represents a positive integer, and g independently represents an integer in the range of from 3 to 40, inclusive; n divalent groups represented by the formula

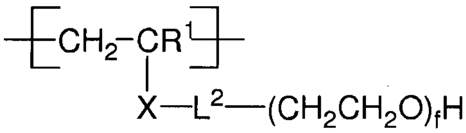

wherein $L^2$ independently represents a covalent bond or divalent organic linking group, n represents a positive integer; and f independently represents an integer in the range of from 3 to 200, inclusive;
p divalent groups represented by the formula

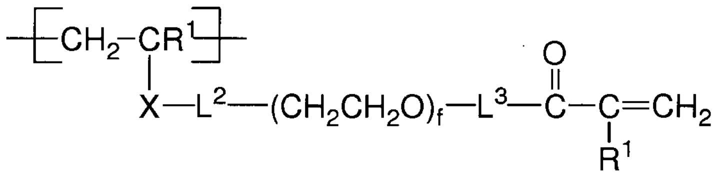

wherein p represents a positive integer, and wherein $L^3$ represents a covalent bond or a divalent organic linking group; and

b) a nonfluorinated free-radically polymerizable ethylenically-unsaturated compound; and
c) an effective amount of free-radical initiator,

wherein component a) comprises at least 50 percent of the total weight of components a), b), and c) combined.

**2.** A curable antifouling composition according to claim 1, wherein g is in a range of from 4 to 20.

**3.** A curable antifouling composition according to claim 1, wherein f is in a range of from 5 to 68.

**4.** A curable antifouling composition according to claim 1, wherein components a) and c) are present in a weight ratio of from 95:5 to 99.5:0.5.

**5.** A curable antifouling composition according to claim 1, wherein the ratio of m to (n + p) is in a range of from 60:40 to 5:95.

**6.** A curable antifouling composition according to claim 1, wherein the ratio of n to p is in a range of from 1:99 to 90:10.

**7.** A method of using a curable antifouling composition, the method comprising:

applying a curable antifouling composition to at least a portion of a surface of a substrate, wherein the substrate is selected from the group consisting of marine vessel hulls, anchors, piers, docks, caissons, invasive medical devices, non-invasive medical devices, handrails, door knobs, countertops, membrane support frames, heat exchangers, microelectrochemical drug delivery devices, papermaking machines, tanks for holding liquid, water pipes, plumbing fixtures, and mariculture apparatuses; and
at least partially curing the curable antifouling composition, wherein the curable antifouling composition comprises:

a) at least one fluorinated polymer, wherein each said at least one fluorinated polymer independently comprises the components:

m divalent groups represented by the formula

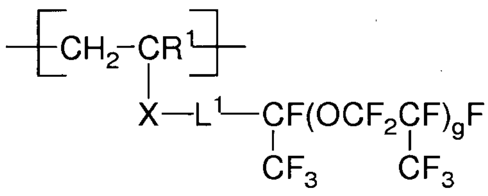

wherein $R^1$ independently represents H or methyl, X independently represents a covalent bond or a divalent organic linking group, $L^1$ independently represents a covalent bond or a divalent organic linking group, m represents a positive integer, and g independently represents an integer in the range of from 3 to 40, inclusive;
n divalent groups represented by the formula

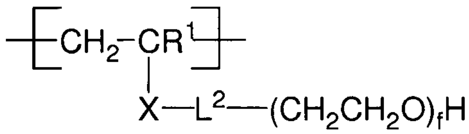

wherein $L^2$ independently represents a covalent bond or divalent organic linking group, n represents a positive integer; and f independently represents an integer in the range of from 3 to 200, inclusive;
p divalent groups represented by the formula

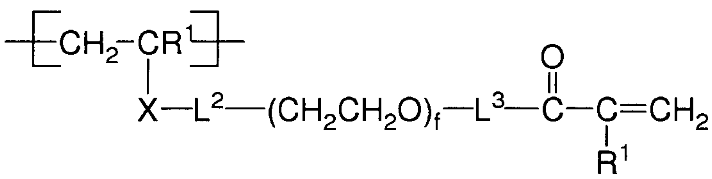

wherein p represents a positive integer, and wherein $L^3$ represents a covalent bond or a divalent organic linking group; and

b) an effective amount of free-radical initiator.

**8.** A method according to claim 7, wherein g is in a range of from 4 to 20.

**9.** A method according to claim 7, wherein f is in a range of from 5 to 68.

**10.** A method according to claim 7, wherein the curable antifouling composition further comprises:

c) a nonfluorinated free-radically polymerizable ethylenically-unsaturated compound.

**11.** An article comprising a substrate having a surface, wherein at least a portion of the surface has an antifouling coating thereon, wherein the substrate is selected from the group consisting of marine vessel hulls, anchors, piers, docks, caissons, invasive medical devices, non-invasive medical devices, handrails, door knobs, countertops, membrane support frames, heat exchangers, microelectrochemical drug delivery devices, papermaking machines, tanks for holding liquid, water pipes, plumbing fixtures, and mariculture apparatuses, wherein the antifouling coating comprises an at least partially cured curable antifouling composition, and wherein the curable antifouling composition comprises components:

a) at least one fluorinated polymer, wherein each said at least one fluorinated polymer independently comprises:

m divalent groups represented by the formula

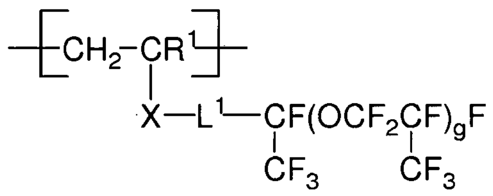

wherein $R^1$ independently represents H or methyl, X independently represents a covalent bond or a divalent organic linking group, $L^1$ independently represents a covalent bond or a divalent organic linking group, m represents a positive integer, and g independently represents an integer in the range of from 3 to 40, inclusive; n divalent groups represented by the formula

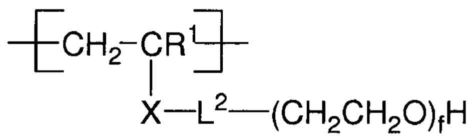

wherein $L^2$ independently represents a covalent bond or divalent organic linking group, n represents a positive integer; and f independently represents an integer in the range of from 3 to 200, inclusive; p divalent groups represented by the formula

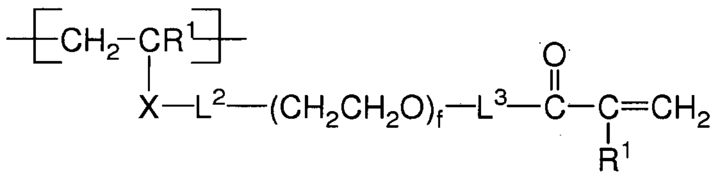

wherein p represents a positive integer, and wherein $L^3$ represents a covalent bond or a divalent organic linking group; and

b) an effective amount of free-radical initiator.

**12.** An article according to claim 11, wherein g is in a range of from 4 to 20.

**13.** An article according to claim 11, wherein f is in a range of from 5 to 68.

**14.** An article according to claim 11, wherein the curable antifouling composition further comprises:

c) a nonfluorinated free-radically polymerizable ethylenically-unsaturated compound.

**15.** An article according to claim 11, wherein the ratio of m to (n+ p) is in a range of from 60:40 to 5:95.

**Patentansprüche**

**1.** Härtbare anwuchsverhindernde Zusammensetzung, umfassend die folgenden Bestandteile:

a) mindestens ein fluoriertes Polymer, wobei jedes des mindestens einen fluorierten Polymers unabhängig Folgendes umfasst:

m zweiwertige Gruppen, dargestellt durch die Formel

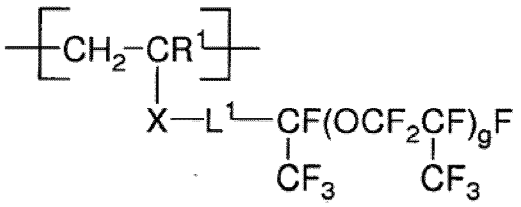

worin $R^1$ unabhängig H oder Methyl darstellt, X unabhängig eine kovalente Bindung oder eine zweiwertige organische Verbindungsgruppe darstellt, $L^1$ unabhängig eine kovalente Bindung oder eine zweiwertige organische Verbindungsgruppe darstellt, m eine positive ganze Zahl darstellt und g unabhängig eine ganze Zahl im Bereich von 3 bis einschließlich 40 darstellt; n zweiwertige Gruppen, dargestellt durch die Formel

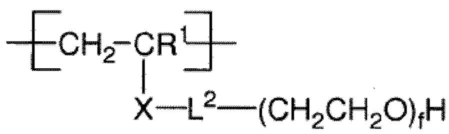

worin $L^2$ unabhängig eine kovalente Bindung oder zweiwertige organische Verbindungsgruppe darstellt, n eine positive ganze Zahl darstellt; und f unabhängig eine ganze Zahl im Bereich von 3 bis einschließlich 200 darstellt;
p zweiwertige Gruppen, dargestellt durch die Formel

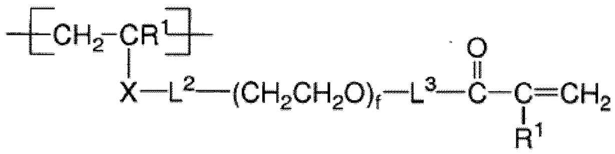

worin p eine positive ganze Zahl darstellt und worin $L^3$ eine kovalente Bindung oder eine zweiwertige organische Verbindungsgruppe darstellt; und

b) eine nichtfluorierte, radikalisch polymerisierbare, ethylenisch ungesättigte Verbindung; und
c) eine wirksame Menge an Radikalstarter,

wobei Bestandteil a) mindestens 50 Prozent des Gesamtgewichts von Bestandteilen a), b) und c) kombiniert umfasst.

**2.** Härtbare anwuchsverhindernde Zusammensetzung nach Anspruch 1, wobei g in einem Bereich von 4 bis 20 liegt.

**3.** Härtbare anwuchsverhindernde Zusammensetzung nach Anspruch 1, wobei f in einem Bereich von 5 bis 68 liegt.

**4.** Härtbare anwuchsverhindernde Zusammensetzung nach Anspruch 1, wobei Bestandteile a) und c) in einem Gewichtsverhältnis von 95:5 bis 99,5:0,5 vorliegen.

**5.** Härtbare anwuchsverhindernde Zusammensetzung nach Anspruch 1, wobei das Verhältnis von m zu (n + p) in einem Bereich von 60:40 bis 5:95 liegt.

**6.** Härtbare anwuchsverhindernde Zusammensetzung nach Anspruch 1, wobei das Verhältnis von n zu p in einem Bereich von 1:99 bis 90:10 liegt.

**7.** Verfahren zum Verwenden einer härtbaren anwuchsverhindernden Zusammensetzung, wobei das Verfahren umfasst: Auftragen einer härtbaren anwuchsverhindernden Zusammensetzung auf mindestens einen Abschnitt einer Oberfläche eines Substrats,
wobei das Substrat ausgewählt ist aus der Gruppe bestehend aus Hüllen mariner Wasserfahrzeuge, Ankern, Pieren, Docks, Senkkästen, invasiven medizinischen Vorrichtungen, nichtinvasiven medizinischen Vorrichtungen, Geländern, Türknäufen, Arbeitsflächen, Stützrahmen für Membranen, Wärmetauschern, mikroelektrochemischen Arzneimittelabgabevorrichtungen, Maschinen zum Papierherstellen, Behältern zum Fassen von Flüssigkeit, Wasserleitungen, Sanitärarmaturen und Marikulturgeräten; und
mindestens teilweises Härten der härtbaren anwuchsverhindernden Zusammensetzung, wobei die härtbare anwuchsverhindernde Zusammensetzung Folgendes umfasst:

a) mindestens ein fluoriertes Polymer, wobei jedes des mindestens einen fluorierten Polymers unabhängig die folgenden Bestandteile umfasst:

m zweiwertige Gruppen, dargestellt durch die Formel

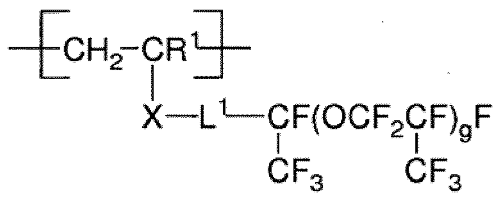

worin $R^1$ unabhängig H oder Methyl darstellt, X unabhängig eine kovalente Bindung oder eine zweiwertige organische Verbindungsgruppe darstellt, $L^1$ unabhängig eine kovalente Bindung oder eine zweiwertige organische Verbindungsgruppe darstellt, m eine positive ganze Zahl darstellt und g unabhängig eine ganze Zahl im Bereich von 3 bis einschließlich 40 darstellt; n zweiwertige Gruppen, dargestellt durch die Formel

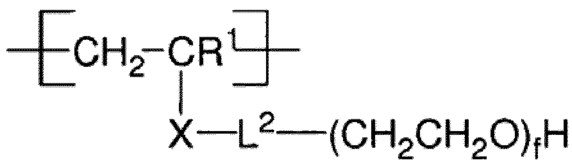

worin $L^2$ unabhängig eine kovalente Bindung oder zweiwertige organische Verbindungsgruppe darstellt, n eine positive ganze Zahl darstellt; und f unabhängig eine ganze Zahl im Bereich von 3 bis einschließlich 200 darstellt;
p zweiwertige Gruppen, dargestellt durch die Formel

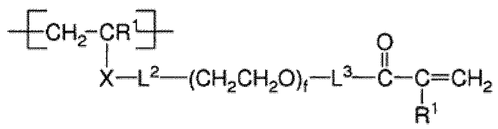

worin p eine positive ganze Zahl darstellt und worin $L^3$ eine kovalente Bindung oder eine zweiwertige organische Verbindungsgruppe darstellt; und

b) eine wirksame Menge an Radikalstarter.

**8.** Verfahren nach Anspruch 7, wobei g in einem Bereich von 4 bis 20 liegt.

**9.** Verfahren nach Anspruch 7, wobei f in einem Bereich von 5 bis 68 liegt.

**10.** Verfahren nach Anspruch 7, wobei die härtbare anwuchsverhindernde Zusammensetzung ferner umfasst:

c) eine nichtfluorierte, radikalisch polymerisierbare, ethylenisch ungesättigte Verbindung.

**11.** Artikel umfassend ein Substrat mit einer Oberfläche, wobei mindestens ein Abschnitt des Substrats eine anwuchsverhindernde Beschichtung darauf aufweist, wobei das Substrat ausgewählt ist aus der Gruppe, bestehend aus Hüllen mariner Wasserfahrzeuge, Ankern, Pieren, Docks, Senkkästen, invasiven medizinischen Vorrichtungen, nichtinvasiven medizinischen Vorrichtungen, Geländern, Türknäufen, Arbeitsflächen, Stützrahmen für Membranen, Wärmetauschern, mikroelektrochemischen Arzneimittelabgabevorrichtungen, Maschinen zum Papierherstellen,

Behältern zum Fassen von Flüssigkeit, Wasserleitungen, Sanitärarmaturen und Marikulturgeräten, wobei die anwuchsverhindernde Beschichtung eine mindestens teilweise gehärtete härtbare anwuchsverhindernde Zusammensetzung umfasst, und wobei die härtbare anwuchsverhindernde Zusammensetzung folgende Bestandteile umfasst:

a) mindestens ein fluoriertes Polymer, wobei jedes des mindestens einen fluorierten Polymers unabhängig Folgendes umfasst:

m zweiwertige Gruppen, dargestellt durch die Formel

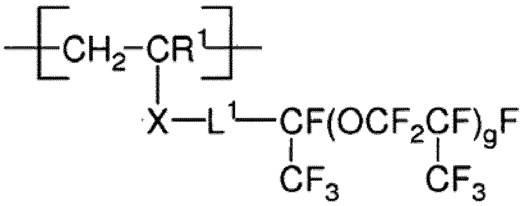

worin $R^1$ unabhängig H oder Methyl darstellt, X unabhängig eine kovalente Bindung oder eine zweiwertige organische Verbindungsgruppe darstellt, $L^1$ unabhängig eine kovalente Bindung oder eine zweiwertige organische Verbindungsgruppe darstellt, m eine positive ganze Zahl darstellt und g unabhängig eine ganze Zahl im Bereich von 3 bis einschließlich 40 darstellt;
n zweiwertige Gruppen, dargestellt durch die Formel

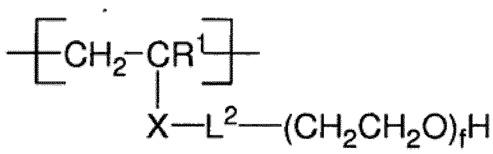

wobei $L^2$ unabhängig eine kovalente Bindung oder zweiwertige organische Verbindungsgruppe darstellt, n eine positive ganze Zahl darstellt; und f unabhängig eine ganze Zahl im Bereich von 3 bis einschließlich 200 darstellt;
p zweiwertige Gruppen, dargestellt durch die Formel

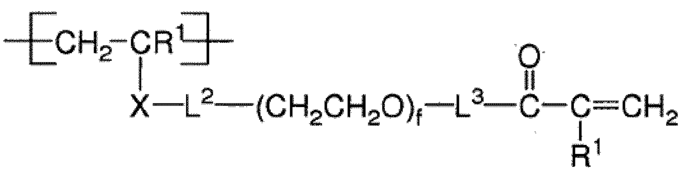

worin p eine positive ganze Zahl darstellt und worin $L^3$ eine kovalente Bindung oder eine zweiwertige organische Verbindungsgruppe darstellt; und

b) eine wirksame Menge an Radikalstarter.

**12.** Artikel nach Anspruch 11, wobei g in einem Bereich von 4 bis 20 liegt.

**13.** Artikel nach Anspruch 11, wobei f in einem Bereich von 5 bis 68 liegt.

**14.** Artikel nach Anspruch 11, wobei die härtbare anwuchsverhindernde Zusammensetzung ferner umfasst:

c) eine nichtfluorierte, radikalisch polymerisierbare, ethylenisch ungesättigte Verbindung.

**15.** Artikel nach Anspruch 11, wobei das Verhältnis von m zu (n + p) in einem Bereich von 60:40 bis 5:95 liegt.

**Revendications**

**1.** Composition antisalissure durcissable comprenant les composants :

a) au moins un polymère fluoré, dans laquelle chaque au moins un polymère fluoré précité comprend indépendamment :

m groupes divalents représentés par la formule

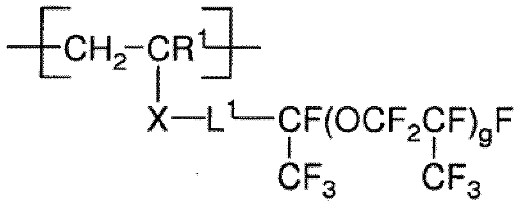

dans laquelle $R^1$ représente indépendamment H ou méthyle, X représente indépendamment une liaison covalente ou un groupe de liaison organique divalent, $L^1$ représente indépendamment une liaison covalente ou un groupe de liaison organique divalent, m représente un nombre entier positif, et g représente indépendamment un nombre entier dans la plage allant de 3 à 40, inclus ; n groupes divalents représentés par la formule

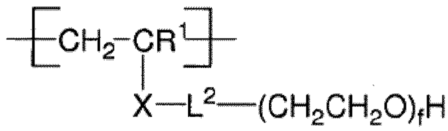

dans laquelle $L^2$ représente indépendamment une liaison covalente ou un groupe de liaison organique divalent, n représente un nombre entier positif ; et f représente indépendamment un nombre entier dans la plage allant de 3 à 200, inclus ;
p groupes divalents représentés par la formule

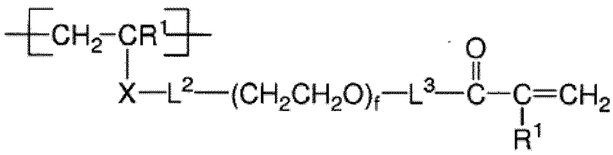

dans laquelle p représente un nombre entier positif, et dans laquelle $L^3$ représente une liaison covalente ou un groupe de liaison organique divalent ; et

b) un composé comportant une insaturation éthylénique polymérisable par radicaux libres non fluoré ; et
c) une quantité efficace d'inducteur de radicaux libres,

dans laquelle le composant a) comprend au moins 50 pour cent du poids total de composants a), b) et c) combinés.

**2.** Composition antisalissure durcissable selon la revendication 1, dans laquelle g est dans une plage allant de 4 à 20.

**3.** Composition antisalissure durcissable selon la revendication 1, dans laquelle f est dans une plage allant de 5 à 68.

**4.** Composition antisalissure durcissable selon la revendication 1, dans laquelle les composants a) et c) sont présents dans un rapport pondéral allant de 95:5 à 99,5:0,5.

**5.** Composition antisalissure durcissable selon la revendication 1, dans laquelle le rapport de m sur (n + p) est dans une plage allant de 60:40 à 5:95.

**6.** Composition antisalissure durcissable selon la revendication 1, dans laquelle le rapport de n sur p est dans une plage allant de 1:99 à 90:10.

**7.** Procédé d'utilisation d'une composition antisalissure durcissable, le procédé comprenant : l'application d'une composition antisalissure durcissable sur au moins une partie d'une surface d'un substrat,
dans lequel le substrat est choisi dans le groupe constitué de coques de navire, ancres, piliers, quais, caissons, dispositifs médicaux invasifs, dispositifs médicaux non invasifs, rambardes, poignées de porte, plans de travail, cadres de support de membrane, échangeurs thermiques, dispositifs microélectrochimiques d'administration de médicaments, machines de fabrication de papier, réservoirs pour contenir un liquide, tuyaux d'eau, raccords de plomberie, et appareils de mariculture ; et
le durcissement au moins partiel de la composition antisalissure durcissable, dans lequel la composition antisalissure durcissable comprend :

a) au moins un polymère fluoré, dans lequel chaque au moins un polymère fluoré précité comprend indépendamment les composants :

m groupes divalents représentés par la formule

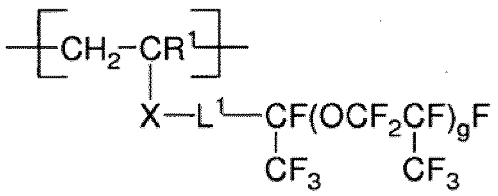

dans laquelle $R^1$ représente indépendamment H ou méthyle, X représente indépendamment une liaison covalente ou un groupe de liaison organique divalent, $L^1$ représente indépendamment une liaison covalente ou un groupe de liaison organique divalent, m représente un nombre entier positif, et g représente indépendamment un nombre entier dans la plage allant de 3 à 40, inclus ; n groupes divalents représentés par la formule

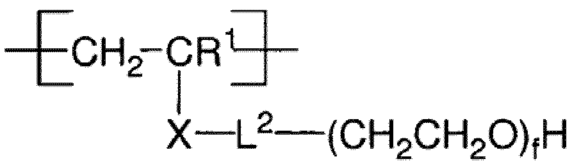

dans laquelle $L^2$ représente indépendamment une liaison covalente ou un groupe de liaison organique divalent, n représente un nombre entier positif ; et f représente indépendamment un nombre entier dans la plage allant de 3 à 200, inclus ;
p groupes divalents représentés par la formule

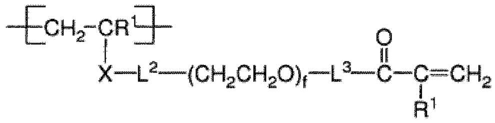

dans laquelle p représente un nombre entier positif, et dans laquelle $L^3$ représente une liaison covalente ou un groupe de liaison organique divalent ; et

b) une quantité efficace d'inducteur de radicaux libres.

**8.** Procédé selon la revendication 7, dans lequel g est dans une plage allant de 4 à 20.

**9.** Procédé selon la revendication 7, dans lequel f est dans une plage allant de 5 à 68.

**10.** Procédé selon la revendication 7, dans lequel la composition antisalissure durcissable comprend en outre :

c) un composé comportant une insaturation éthylénique polymérisable par radicaux libres non fluoré.

**11.** Article comprenant un substrat possédant une surface, dans lequel au moins une partie de la surface comporte sur celle-ci un revêtement antisalissure, dans lequel le substrat est choisi dans le groupe constitué de coques de navire, ancres, piliers, quais, caissons, dispositifs médicaux invasifs, dispositifs médicaux non invasifs, rambardes, poignées de porte, plans de travail, cadres de support de membrane, échangeurs thermiques, dispositifs microélectrochimiques d'administration de médicaments, machines de fabrication de papier, réservoirs pour contenir un liquide, tuyaux d'eau, équipements de plomberie, et appareils de mariculture, dans lequel le revêtement antisalissure comprend une composition antisalissure durcissable au moins partiellement durcie, et dans lequel la composition antisalissure durcissable comprend les composants :

a) au moins un polymère fluoré, dans lequel chaque au moins un polymère fluoré précité comprend indépendamment :

m groupes divalents représentés par la formule

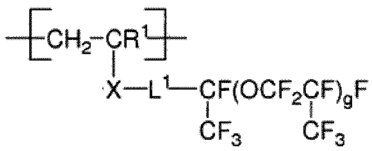

dans laquelle $R^1$ représente indépendamment H ou méthyle, X représente indépendamment une liaison covalente ou un groupe de liaison organique divalent, $L^1$ représente indépendamment une liaison covalente ou un groupe de liaison organique divalent, m représente un nombre entier positif, et g représente indépendamment un nombre entier dans la plage allant de 3 à 40, inclus ;
n groupes divalents représentés par la formule

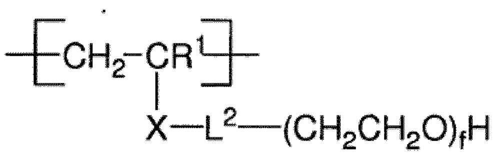

dans laquelle $L^2$ représente indépendamment une liaison covalente ou un groupe de liaison organique divalent, n représente un nombre entier positif ; et f représente indépendamment un nombre entier dans la plage allant de 3 à 200, inclus ;
p groupes divalents représentés par la formule

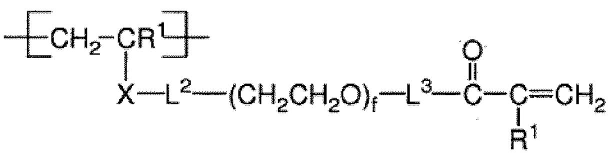

dans laquelle p représente un nombre entier positif, et dans laquelle $L^3$ représente une liaison covalente ou un groupe de liaison organique divalent ; et

b) une quantité efficace d'inducteur de radicaux libres.

**12.** Article selon la revendication 11, dans lequel g est dans une plage allant de 4 à 20.

**13.** Article selon la revendication 11, dans lequel f est dans une plage allant de 5 à 68.

**14.** Article selon la revendication 11, dans lequel la composition antisalissure durcissable comprend en outre :

c) un composé comportant une insaturation éthylénique polymérisable par radicaux libres non fluoré.

**15.** Article selon la revendication 11, dans lequel le rapport de m sur (n+ p) est dans une plage allant de 60:40 à 5:95.

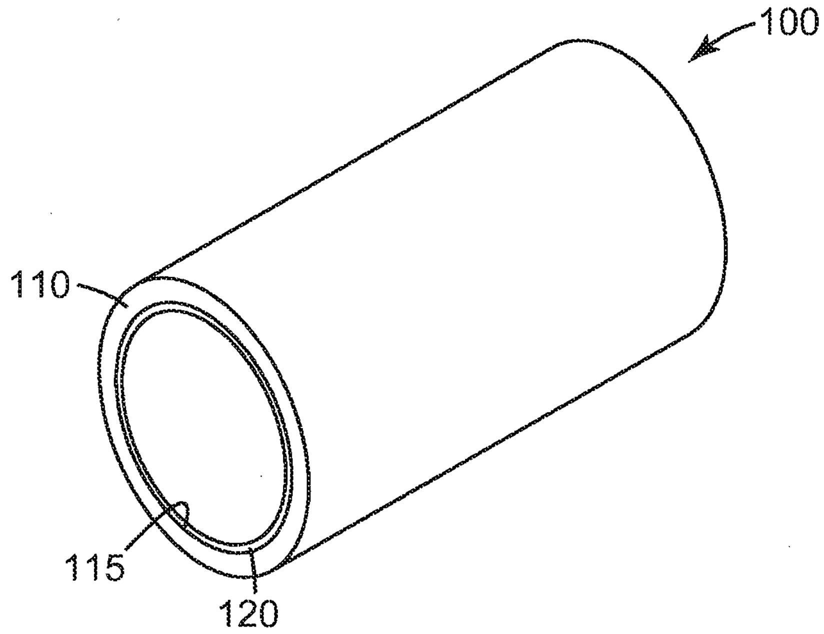


Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3553179 A, Bartlett
- US 3544537 A, Brace
- US 20040077775 A1, Audenaert
- US 20100310875 A1, Hao
- US 4654233 A, Grant
- US 4855184 A, Klun
- US 6224949 A, Wright


### Non-patent literature cited in the description


- **GUILLARD R.R.L. ; RYTHER J. H.** Studies of Marine Planktonic Diatoms: I. Cyclotella nana Hustedt and Detonula confervacea (cleve) Gran. *Canadian Journal of Microbiology,* 1962, vol. 8 (2), 229-239